# EUROPEAN PATENT SPECIFICATION

(11) **EP 3 577 582 B1**
(45) Date of publication and mention of the grant of the patent: **05.03.2025**
(21) Application number: 18748382.1
(22) Date of filing: 30.01.2018
(51) Int. Cl.: G06F 16/93, G10L 15/18, H04M 3/493, G10L 15/26, H04M 3/51

(54) **SYSTEM AND METHOD FOR SPEECH-BASED INTERACTION RESOLUTION**
SYSTEME UND VERFAHREN FÜR SPRACHBASIERTE INTERAKTIONSAUFLÖSUNG
SYSTÈME ET PROCÉDÉ DE RÉSOLUTION D'INTERACTION BASÉE SUR LA PAROLE

(30) Priority: 31.01.2017 US 201762452556 P
(43) Date of publication of application: 11.12.2019
(73) Proprietor: Genesys Cloud Services, Inc., Menlo Park, CA 94025 (US)
(72) Inventor: SAINI, Ranjeet, Daly City, CA 94014 (US); ROY, Partha Pratim, Daly City, CA 94014 (US)
(74) Representative: FRKelly
(86) International application number: PCT/US2018/015972
(87) International publication number: WO 2018/144465

(56) References cited:
- CN-A- 105 760 399
- US-A1- 2003 125 958
- US-A1- 2003 125 958
- US-A1- 2004 249 636
- US-A1- 2010 114 571
- US-A1- 2010 274 618
- TERUHISA MISU ET AL: "Speech-based information retrieval system with clarification dialogue strategy", HUMAN LANGUAGE TECHNOLOGY AND EMPIRICAL METHODS IN NATURAL LANGUAGE PROCESSING, ASSOCIATION FOR COMPUTATIONAL LINGUISTICS, N. EIGHT STREET, STROUDSBURG, PA, 18360 07960-1961 USA, 6 October 2005 (2005-10-06), pages 1003 - 1010, XP058318358, DOI: 10.3115/1220575.1220701
- MISU T ET AL: "Dialogue strategy to clarify user's queries for document retrieval system with speech interface", SPEECH COMMUNICATION, ELSEVIER SCIENCE PUBLISHERS, AMSTERDAM, NL, vol. 48, no. 9, 1 September 2006 (2006-09-01), pages 1137 - 1150, XP027926280, ISSN: 0167-6393, [retrieved on 20060901]

## Description

### BACKGROUND

In various organizations, a knowledge base or knowledge management system stores organization-specific information. This organization-specific information may include, for example, sales literature regarding features of various products and services offered by the organization, configuration guides for these products, and troubleshooting guides for diagnosing and solving problems that may be encountered by users of the products.

Contact center agents and other employees of the organization may consult the documents in the knowledge base when attempting to resolve customer interactions. For example, during a sales interaction, an agent may provide information about the various products, and during a technical support interaction, an agent may provide troubleshooting information to diagnose and to repair a faulty device. TERUHISA MISU ET AL, "Speech-based information retrieval system with clarification dialogue strategy", HUMAN LANGUAGE TECHNOLOGY AND EMPIRICAL METHODS IN NATURAL LANGUAGE PROCESSING, ASSOCIATION FOR COMPUTATIONAL LINGUISTICS, N. EIGHT STREET, STROUDSBURG, PA, 18360 07960-1961 USA, (20051006), doi:10.3115/1220575.1220701, pages 1003 - 1010, XP058318358 (D1) addresses a dialogue strategy to clarify and constrain the queries for speech-driven document retrieval systems. In spoken dialogue interfaces, users often make utterances before the query is completely generated in their mind; thus input queries are often vague or fragmental. As a result, usually many items are matched. The authors propose an efficient dialogue framework, where the system dynamically selects an optimal question based on information gain (IG), which represents reduction of matched items. A set of possible questions is prepared using various knowledge sources. As a bottom-up knowledge source, the authors extract a list of words that can take a number of objects and potentially causes ambiguity, using a dependency structure analysis of the document texts. This is complemented by top-down knowledge sources of metadata and handcrafted questions. An experimental evaluation showed that the method significantly improved the success rate of retrieval, and all categories of the prepared questions contributed to the improvement. US2003125958 (ALPDEMIR AHMET [US], et al) (D2) discloses a system, method, and business model for an information system and service having business self-promotion, audio coupon, ratings, and other features. A business or organization in which consumers call into a service using an ordinary telephone, PC, PDA, or other information appliance, and make requests in plain speech for information on goods and/or services, and the service provides responses to the request in plain speech in real-time. Provides an operating model for a telephone-based audio-interfaced goods and services information and referral service having merchant self-promotion features, including database provider storing merchant information; an interface for inputting merchant information into the database and for retrieving and editing the information; and an interface for inputting voice commands and data and for receiving merchant information and processed information from the database in response to the input voice commands and data. The invention provides a system including: a speech-to-text conversion engine converting speech-based input commands and data received from an external device over a communication link into text-based commands and data; a data base storing a plurality of data items; a search engine searching the database for a particular data item in response to the text-based command and data; a text-to-speech conversion engine generating a speech-based representation of the particular data item identified in the database search; and a speech server for communicating the speech-based representation of the particular data item to the external device.

### SUMMARY

It is an object of the invention to overcome the shortcomings in the prior art. This object of the invention is solved by the independent claims. Specific embodiments are defined in the dependent claims.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a schematic block diagram of a system for supporting a contact center in providing contact center services according to one exemplary embodiment of the invention.
FIG. 2 is a block diagram of a portion of a contact center for implementing a speech-based interaction resolution system according to one embodiment of the present invention.
FIG. 3 is a flowchart of a method for handling customer interactions using a speech-based interaction resolution system according to one embodiment of the present invention.
FIG. 4 is a flowchart of a method according to one embodiment of the present invention for searching a knowledge base using speech input.
FIG. 5 is a flowchart of a method for generating a search query from recognized text in accordance with one embodiment of the present invention.
FIG. 6A is a block diagram of a computing device according to an embodiment of the present invention.
FIG. 6B is a block diagram of a computing device according to an embodiment of the present invention.
FIG. 6C is a block diagram of a computing device according to an embodiment of the present invention.
FIG. 6D is a block diagram of a computing device according to an embodiment of the present invention.
FIG. 6E is a block diagram of a network environment including several computing devices according to an embodiment of the present invention.

### DETAILED DESCRIPTION

The invention sets out a method for automatically retrieving documents in real-time according to claim 1 and a system for automatically retrieving documents in real-time according to claim 10. Aspects of the present invention are directed to systems and methods for automatic speech-based interaction resolution.

Agents of a contact center of a particular organization or enterprise frequently consult organization-specific or proprietary documentation to address customer inquiries described during interactions. While experienced agents can often answer routine questions without consulting documentation, when an agent is new to a contact center or new to a particular role, the new agent may have very limited knowledge in the domain of the topics of the interactions that the agent will be expected to handle. For example, an agent who is new to a sales of a particular line of products might lack specific knowledge about the features of each product in the line. As another example, an agent who is new to providing technical support for a particular device may lack detailed knowledge of the different failure modes of the device, techniques for diagnosing the particular problem encountered by the customer, and solutions to the particular sets of problems. Furthermore, even experienced agents may need to review organization-specific documentation to address uncommon or infrequent questions about obscure topics.

Accordingly, a contact center typically provides its agents with access to a knowledge base (sometimes referred to as a "knowledge database," a "knowledgebase," or a "knowledge management system") containing information that is particularly relevant to the domain of issues encountered by the agents. Returning to the above examples, a sales agent may have access to a knowledge database containing detailed specifications, feature comparison charts, pricing guides, and other sales literature regarding the various product lines of the organization (or at least the product lines that the agent is responsible for selling). As another example, a customer support agent may have access to a knowledge database that contains specialized troubleshooting manuals for each product in the product line (as well as customized manuals for different configurations of the products) and documents containing other information that may be useful for solving problems encountered by customers, such as lists of known incompatibilities and workarounds.

Consulting this knowledge database can be a time-consuming process, because an agent must manually craft a search query for searching the knowledge base based on the agent's understanding of the customer's inquiry. Furthermore, the customer must wait (e.g., be put on hold) while the agent searches for documents and reviews the documents to synthesize an answer for the customer. This wait time can incur a significant load on contact center (e.g., the wait time can reduce the number of customers that can be served every hour), can lead to customer frustration, poor customer reviews (e.g., poor net promoter scores), and the like.

As such, embodiments of the present invention are directed to systems and methods for automatic speech-based interaction resolution. In some embodiments of the present invention, customer speech (e.g., audio) is used to query, automatically, a knowledge database for documents that are relevant to the customer's inquiry. This enables faster resolution of the customer's issue by automatically providing the relevant information to the customer, whether this information is provided directly or through the agent.

### Contact center overview

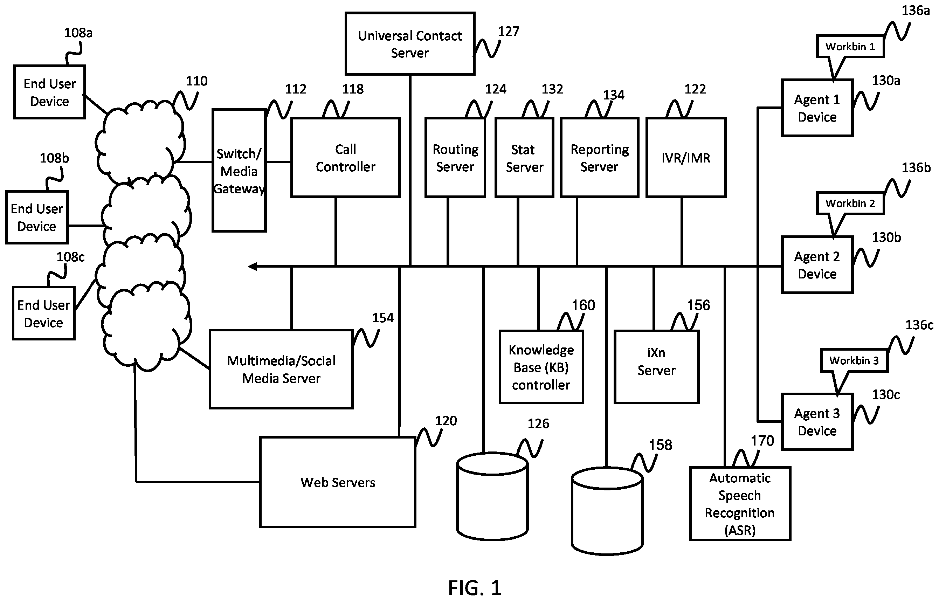

FIG. 1 is a schematic block diagram of a system for supporting a contact center in providing contact center services according to one exemplary embodiment of the invention. The contact center may be an in-house facility to a business or enterprise for serving the enterprise in performing the functions of sales and service relative to the products and services available through the enterprise. In another aspect, the contact center may be operated by a third-party service provider. According to some embodiments, the contact center may operate as a hybrid system in which some components of the contact center system are hosted at the contact center premise and other components are hosted remotely (e.g., in a cloud-based environment). The contact center may be deployed in equipment dedicated to the enterprise or third-party service provider, and/or deployed in a remote computing environment such as, for example, a private or public cloud environment with infrastructure for supporting multiple contact centers for multiple enterprises. The various components of the contact center system may also be distributed across various geographic locations and computing environments and not necessarily contained in a single location, computing environment, or even computing device.

According to one example embodiment, the contact center system manages resources (e.g. personnel, computers, and telecommunication equipment) to enable delivery of services via telephone or other communication mechanisms. Such services may vary depending on the type of contact center, and may range from customer service to help desk, emergency response, telemarketing, order taking, and the like.

Customers, potential customers, or other end users (collectively referred to as customers or end users, e.g., end users) desiring to receive services from the contact center may initiate inbound communications (e.g., telephony calls) to the contact center via their end user devices 108a-108c (collectively referenced as 108). Each of the end user devices 108 may be a communication device conventional in the art, such as, for example, a telephone, wireless phone, smart phone, personal computer, electronic tablet, and/or the like. Users operating the end user devices 108 may initiate, manage, and respond to telephone calls, emails, chats, text messaging, web-browsing sessions, and other multi-media transactions.

Inbound and outbound communications from and to the end user devices 108 may traverse a telephone, cellular, and/or data communication network 110 depending on the type of device that is being used. For example, the communications network 110 may include a private or public switched telephone network (PSTN), local area network (LAN), private wide area network (WAN), and/or public wide area network such as, for example, the Internet. The communications network 110 may also include a wireless carrier network including a code division multiple access (CDMA) network, global system for mobile communications (GSM) network, or any wireless network/technology conventional in the art, including but to limited to 3G, 4G, LTE, and the like.

According to one example embodiment, the contact center system includes a switch/media gateway 112 coupled to the communications network 110 for receiving and transmitting telephony calls between end users and the contact center. The switch/media gateway 112 may include a telephony switch or communication switch configured to function as a central switch for agent level routing within the center. The switch may be a hardware switching system or a soft switch implemented via software. For example, the switch 112 may include an automatic call distributor, a private branch exchange (PBX), an IP-based software switch, and/or any other switch with specialized hardware and software configured to receive Internet-sourced interactions and/or telephone network-sourced interactions from a customer, and route those interactions to, for example, an agent telephony or communication device. In this example, the switch/media gateway establishes a voice path/connection (not shown) between the calling customer and the agent telephony device, by establishing, for example, a connection between the customer's telephony device and the agent telephony device.

According to one exemplary embodiment of the invention, the switch is coupled to a call controller 118 which may, for example, serve as an adapter or interface between the switch and the remainder of the routing, monitoring, and other communication-handling components of the contact center.

The call controller 118 may be configured to process PSTN calls, VoIP calls, and the like. For example, the call controller 118 may be configured with computer-telephony integration (CTI) software for interfacing with the switch/media gateway and contact center equipment. In one embodiment, the call controller 118 may include a session initiation protocol (SIP) server for processing SIP calls. According to some exemplary embodiments, the call controller 118 may, for example, extract data about the customer interaction such as the caller's telephone number, often known as the automatic number identification (ANI) number, or the customer's internet protocol (IP) address, or email address, and communicate with other CC components in processing the interaction.

According to one exemplary embodiment of the invention, the system further includes an interactive voice response (IVR) or an interactive media response (IMR) server 122, which may also be referred to as a self-help system, virtual assistant, or the like. An IVR server is configured to receive audio input from a customer (e.g., touch tones or speech) and to generate responses to the customer input automatically. For example the IVR server may play a menu of options to the customer or play an audio prompt requesting that the customer describe the issue that they are calling about. An IMR server may be similar to an interactive voice response (IVR) server, except that the IMR server 122 is not restricted to voice, but may cover a variety of media channels including voice.

Taking voice as an example the IVR/IMR server 122 may be configured with an IVR/IMR script for querying customers on their needs. For example, a contact center for a bank may tell customers, via the IVR/IMR script, to "press 1" if they wish to get an account balance. If this is the case, through continued interaction with the IVR/IMR server 122, customers may complete service without needing to speak with an agent. The IVR/IMR server 122 may also ask an open ended question such as, for example, "How can I help you?" and the customer may speak or otherwise enter a reason for contacting the contact center. The customer's response may then be used by a routing server 124 to route the call or communication to an appropriate contact center resource.

If the communication is to be routed to an agent, the call controller 118 interacts with the routing server (also referred to as an orchestration server) 124 to find an appropriate agent for processing the interaction. The selection of an appropriate agent for routing an inbound interaction may be based, for example, on a routing strategy employed by the routing server 124, and further based on information about agent availability, skills, and other routing parameters provided, for example, by a statistics server 132.

In some embodiments, the routing server 124 may query a customer database, which stores information about existing clients, such as contact information, service level agreement (SLA) requirements, nature of previous customer contacts and actions taken by contact center to resolve any customer issues, and the like. The database may be, for example, Cassandra or any NoSQL database, and may be stored in a mass storage device 126. The database may also be a SQL database and may be managed by any database management system such as, for example, Oracle, IBM DB2, Microsoft SQL server, Microsoft Access, PostgreSQL, MySQL, FoxPro, and SQLite. The routing server 124 may query the customer information from the customer database via an ANI or any other information collected by the IMR server 122.

Once an appropriate agent is identified as being available to handle a communication, a connection may be made between the customer and an agent device 130a-130c (collectively referenced as 130) of the identified agent. Collected information about the customer and/or the customer's historical information may also be provided to the agent device for aiding the agent in better servicing the communication. In this regard, each agent device 130 may include a telephone adapted for regular telephone calls, VolP calls, and the like. The agent device 130 may also include a computer for communicating with one or more servers of the contact center and performing data processing associated with contact center operations, and for interfacing with customers via voice and other multimedia communication mechanisms.

The contact center system may also include a multimedia/social media server 154 for engaging in media interactions other than voice interactions with the end user devices 108 and/or web servers 120. The media interactions may be related, for example, to email, vmail (voice mail through email), chat, video, text-messaging, web, social media, co-browsing, and the like. In this regard, the multimedia/social media server 154 may take the form of any IP router conventional in the art with specialized hardware and software for receiving, processing, and forwarding multi-media events.

The web servers 120 may include, for example, social interaction site hosts for a variety of known social interaction sites to which an end user may subscribe, such as, for example, Facebook, Twitter, and the like. In this regard, although in the embodiment of FIG. 1 the web servers 120 are depicted as being part of the contact center system, the web servers may also be provided by third parties and/or maintained outside of the contact center premise. The web servers may also provide web pages for the enterprise that is being supported by the contact center. End users may browse the web pages and get information about the enterprise's products and services. The web pages may also provide a mechanism for contacting the contact center, via, for example, web chat, voice call, email, web real time communication (WebRTC), or the like.

According to one exemplary embodiment of the invention, in addition to real-time interactions, deferrable (also referred to as back-office or offline) interactions/activities may also be routed to the contact center agents. Such deferrable activities may include, for example, responding to emails, responding to letters, attending training seminars, or any other activity that does not entail real time communication with a customer. In this regard, an interaction (iXn) server 156 interacts with the routing server 124 for selecting an appropriate agent to handle the activity. Once assigned to an agent, an activity may be pushed to the agent, or may appear in the agent's workbin 136a-136c (collectively referenced as 136) as a task to be completed by the agent. The agent's workbin may be implemented via any data structure conventional in the art, such as, for example, a linked list, array, and/or the like. The workbin 136 may be maintained, for example, in buffer memory of each agent device 130.

According to one exemplary embodiment of the invention, the mass storage device(s) 126 may store one or more databases relating to agent data (e.g. agent profiles, schedules, etc.), customer data (e.g. customer profiles), interaction data (e.g. details of each interaction with a customer, including reason for the interaction, disposition data, time on hold, handle time, etc.), and the like. According to one embodiment, some of the data (e.g. customer profile data) may be maintained in a customer relations management (CRM) database hosted in the mass storage device 126 or elsewhere. The mass storage device may take form of a hard disk or disk array as is conventional in the art.

According to some embodiments, the contact center system may include a universal contact server (UCS) 127, configured to retrieve information stored in the CRM database and direct information to be stored in the CRM database. The UCS 127 may also be configured to facilitate maintaining a history of customers' preferences and interaction history, and to capture and store data regarding comments from agents, customer communication history, and the like.

The contact center system may also include a reporting server 134 configured to generate reports from data aggregated by the statistics server 132. Such reports may include near real-time reports or historical reports concerning the state of resources, such as, for example, average waiting time, abandonment rate, agent occupancy, and the like. The reports may be generated automatically or in response to specific requests from a requestor (e.g. agent/administrator, contact center application, and/or the like).

The contact center system may further include a knowledge base 158 configured to store documents relating to products and/or services offered by the organization, and/or other information of the organization. The documents may include text, images, audio, video, and other forms of media. The knowledge base 158 and the documents stored therein will be described in more detail below.

The contact center system may further include a knowledge base controller 160 configured to retrieve documents from the knowledge base 158 and to transmit the retrieved documents to consumers. As will be described in more detail below, in some embodiments the consumers are agents, where the documents may be transmitted to the agent devices 130, and in some embodiments the consumers are the customers, where the documents may be transmitted to the IVR/IMR server 122.

The contact center system may further include an automatic speech recognition (ASR) server 170 configured to convert speech in audio files into recognized text. The recognized text may include text characters (e.g., a text transcript of the speech contained in the audio) and may be encoded in any of a variety of text encoding formats such as any of the Unicode encoding standards. Each word in the recognized text may also be associated with a corresponding confidence score, where confidence score represents the confidence with which the ASR 170 server transcribed the particular word in the recognized text.

The various servers of FIG. 1 may each include one or more processors executing computer program instructions and interacting with other system components for performing the various functionalities described herein. The computer program instructions are stored in a memory implemented using a standard memory device, such as, for example, a random access memory (RAM). The computer program instructions may also be stored in other non-transitory computer readable media such as, for example, a CD-ROM, flash drive, or the like. Also, although the functionality of each of the servers is described as being provided by the particular server, a person of skill in the art should recognize that the functionality of various servers may be combined or integrated into a single server, or the functionality of a particular server may be distributed across one or more other servers without departing from the scope of the embodiments of the present invention.

In the various embodiments, the terms "interaction" and "communication" are used interchangeably, and generally refer to any real-time and non-real time interaction that uses any communication channel including, without limitation telephony calls (PSTN or VolP calls), emails, vmails (voice mail through email), video, chat, screen-sharing, text messages, social media messages, web real-time communication (e.g. WebRTC calls), and the like.

### Speech-enabled interaction resolution systems

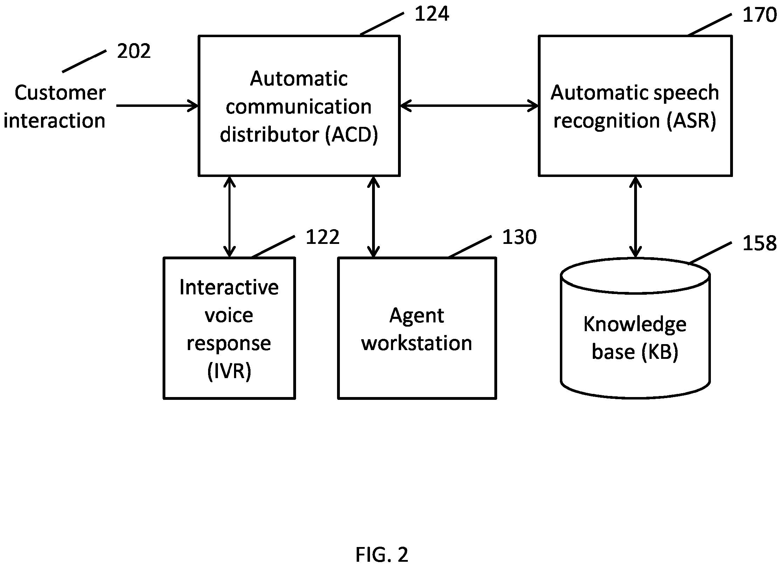

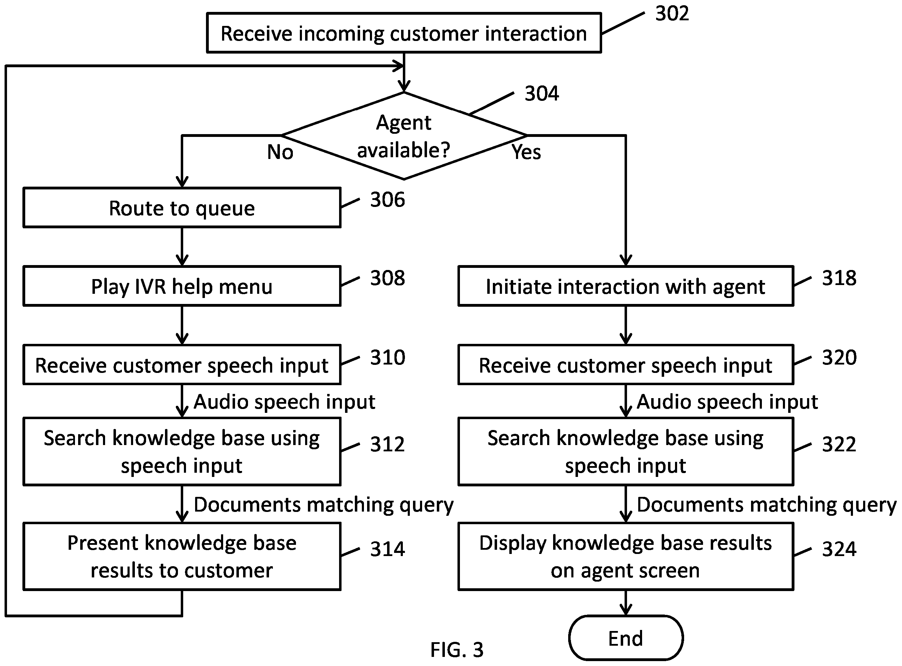

FIG. 2 is a block diagram of a portion of a contact center for implementing a speech-based interaction resolution system according to one embodiment of the present invention. Like reference numerals in FIG. 2 relate to like reference numerals in FIG. 1. FIG. 3 is a flowchart of a method for handling customer interactions using a speech-based interaction resolution system according to one embodiment of the present invention.

Referring to FIGS. 2 and 3, in operation 302 an incoming customer interaction 202 is received by the automatic communication distributor (ACD) or routing server 124. In some embodiments, before arriving at the ACD 124, the incoming customer interaction 202 is first processed by an interactive voice response or interactive media response server 122, which may ask the customer to provide information such as the reason for the interaction and/or customer identifying information (e.g., a phone number or an assigned customer identifier). The information may be provided by the customer using touch tones or spoken (e.g., using a natural language interface). As a specific example, the IVR/IMR server 122 may provide the customer with a list of options (e.g., "sales," "existing orders," "customer support," "technical support," and the like) or may ask the user to describe the reason for the communication, and the customer may respond by speaking a phrase such as "I'm having trouble with the battery life on my phone" or "I would like to purchase a flight to Hyderabad." The IVR/IMR server 122 may then supply the audio containing the customer's spoken natural language input to the automatic speech recognition server 170, which may then generate recognized text from the speech in the audio. The IVR/IMR server 122 or the ACD 124 may then use the recognized text to determine an appropriate party to receive the communication, such as sales, customer support, technical support, etc.). The ACD 124 may automatically determine, in operation 304, whether an agent is available to handle the communication. If not, then the incoming communication is routed to a queue in operation 306. If an agent is available, the customer may be directly connected with an agent in operation 318, without joining the queue. Interactions with an agent will be described in more detail below.

While the customer is waiting in the queue for the next available agent, the IVR/IMR server 122 may continue to interact with the customer through the channel that the customer interaction is using. As shown in FIG. 3, in operation 308, the IVR/IMR server 122 plays a help menu to the customer, where the help menu may offer the customer information while the customer waits. In some embodiments, the help menu provides examples of additional information that the customer can provide for narrowing down the set of documents that may be relevant. In some embodiments, the help menu asks the customer one or more questions to obtain the additional information. In some embodiments, the IVR/IMR 122 may determine that the customer's initial input describing the reason for the interaction contains sufficient information to perform a search of the knowledge base 158 (e.g., through the detection of one or more keywords or phrases, as described in more detail below). In operation 310, the IVR/IMR server 122 receives customer speech input that may be related to the customer's inquiry (e.g., "the battery in my phone does not charge," or "I would like to fly to Hyderabad in March.").

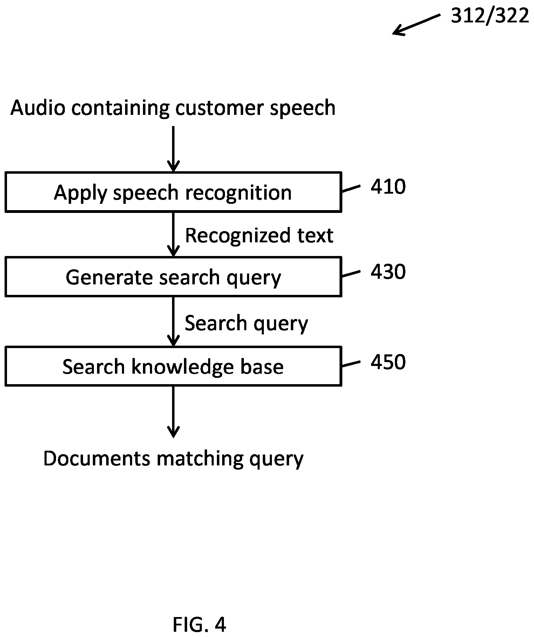

In operation 312, the IVR/IMR server 122 provides the customer speech input (e.g., audio data) to the knowledge base controller 160, which processes the audio input and searches the knowledge base 158 for one or more documents matching a query corresponding to the customer speech input. Methods for searching a knowledge base 158 using audio speech input according to one embodiment of the present invention will be described in more detail below with respect to FIG. 4.

In operation 314, the IVR/IMR server 122 plays back one or more of the documents received from knowledge base (the knowledge base results) to the customer. In some embodiments, the knowledge base controller 160 may restrict or filter the results of the search of the knowledge base 158 during operation 312 to documents that can be presented to the customer in the communication medium in which the customer is communicating with the contact center. For example, in the case of an audio-only medium (e.g., a telephone call), the documents may be restricted to audio documents (e.g., recorded speech) and/or text documents (which may be processed through a text to speech converter), because both of these types of documents can be played back over an audio-only medium. As another example, in the case of a video interaction, the results of the search may also include audio documents as described above, text documents (e.g., the text can be shown in the picture channel of the video interaction and/or converted to speech and played through the audio channel of the interaction), image documents (e.g., the images can be displayed in the video), as well as video documents (e.g., videos illustrating how to complete a particular procedure). In still other embodiments of the present invention, the documents or hyperlinks to the documents are sent to the customer. For example, if an email address for the customer is available (e.g., retrieved from the universal contact server 127 or requested from the customer during the interaction), then the one or more documents, or one or more hyperlinks thereto, can be emailed to the customer. As another example, if the interaction is being conducted through a web browser (e.g., an audio or video call using WebRTC) or if the customer is currently logged in to a website controlled by the contact center, then the IVR/IMR server 122 can control the web browser to display the one or more documents to the customer, such as by sending one or more hyperlinks (or other data, such as a list of documents in JavaScript Object Notation or JSON) to a script running in the web browser to cause the web browser to show the hyperlink and/or the document.

If the knowledge base results automatically presented by the IVR to the customer resolve the customer's issues, then the customer may end the interaction (e.g., hang up the phone) and the interaction may be deemed to be resolved. As such, aspects of embodiments of the present invention enable automatic speech-based interaction resolution of customer interactions, without involving a human agent, by automatically delivering relevant knowledge base documents to the customer.

While the customer interaction is in the queue and the customer is interacting with the IVR through the automatic retrieval and delivery of documents to the customer from the knowledge base, the ACD 124 may continue to check, in operation 304, whether an agent is available. If, at some point, an agent becomes available, the customer interaction may then be connected with (e.g., routed to) the available agent in operation 318 (assuming the customer has not yet ended the interaction).

In some embodiments, when the interaction with the agent is initiated (e.g., routed to the agent) in operation 318, a pre-configured help or knowledge base application may be launched or displayed at the agent workstation 130 to display, to the agent, one or more documents that may be relevant to resolving the interaction. In circumstances where the customer has already provided an indication of the reason for the call, these initially displayed documents may relate to the topics described by the customer, such as the customer's response to an inquiry for the reason of the call. As another example, if the customer has been interacting with the IVR and one or more searches of the knowledge base 158 have already been run based on the customer speech input, then the agent workstation may display one or more documents matching the customer speech input received by the IVR (e.g., such that the agent can continue the interaction with the customer from where it was left by the IVR).

The one or more documents shown to the agent may include the documents played to the user in operation 314, and may also include additional documents. For example, the additional documents may include documents that would not have been appropriate for distribution to the customer, such as proprietary documents (e.g., company internal documents that are not for distribution) and documents in a format that would be unsuited for the particular communication medium that the customer is using to communicate with the contact center. For example, image documents (e.g., troubleshooting flowchart diagrams and product disassembly guides) cannot be shown to customers that are connected in a voice-only interaction, but these image documents can be shown to the agent on a display connected to the agent workstation 130.

In some embodiments, automatic display of documents from the knowledge base is enabled for agents who are new hires based on an assumption that new hires are in more need of assistance. In some circumstances, a newer hire is determined based on the length of time the agent has been working at the contact center (e.g., hired within the past 30 days or within the past 90 days). A new hire may also be an agent who is currently undergoing training, whether due to being a new hire or a transfer from a different department. In some embodiments, automatic initiation of the knowledge base may be provided to any agent who activates the feature within the contact center. In addition, in some embodiments, automatic initiation of the knowledge base is provided to all agents who are deemed to need additional training or who may be underperforming, as measured by their evaluations (e.g., net promoter scores).

An agent can interact with the knowledge base 158 and documents retrieved therefrom in a manner similar to that previously available through manually generating search queries. In one embodiment, the agent workstation 130 is configured to display a the one or more documents identified by a search of the knowledge base 158 and to display the contents of the individual documents when selected by the agent. The agent workstation 130 may also provide an interface, as before, for manually inputting search queries to the knowledge base 158. In some embodiments, the agent is also provided with an interface for modifying a search query that is automatically generated based on customer speech, as described in more detail below with respect to FIG. 4.

During the interaction between the customer and the agent, the customer may provide additional information regarding their inquiry or issue, such as when responding to questions from the agent. The additional customer speech is received in operation 320, and the additional speech input is used to perform an updated search of the knowledge base in 322. The additional speech may be combined with previous speech received from the customer, such that the updated search takes into account all of the customer's input. In some embodiments, the agent may modify the parameters of the automatic search of the knowledge base by, for example, excluding some of the phrases spoken by the customer as not being relevant to resolving the current issue (e.g., when the customer switches topics or if the customer began with a misunderstanding of the nature of the issue).

As such, in operation 324, documents matching an updated query may be displayed on the screen of the agent workstation 130 such that the agent can automatically receive additional potentially relevant documents is accordance with the additional information received from the customer.

The process of receiving additional customer speech input in operation 320, performing an updated search of the knowledge base 158 in operation 322, and displaying additional results on the agent screen in operation 324 continuously repeats during the duration of the interaction, such that the list of potentially relevant documents is updated based on all of the information provided by the customer.

Accordingly, aspects of embodiments of the present invention improve the responsiveness of an agent by automatically searching a knowledge base in accordance with the customer's spoken description of the issue, thereby reducing the amount of time that an agent must spend in researching information to resolve customer inquiries.

### Searching a knowledge base based on audio speech input

FIG. 4 is a flowchart of a method according to one embodiment of the present invention for searching a knowledge base using speech input. In some embodiments of the present invention, the method shown in FIG. 4 is used to perform the search of the knowledge base using speech input as shown in operations 312 and 322 of FIG. 3.

In operation 410, the knowledge base controller 160 applies automatic speech recognition to audio containing customer speech. As noted above, the audio containing customer speech may include audio received from a customer while the customer interaction is waiting in a queue for an agent, where the IVR/IMR 122 prompts the customer for a description of the problem (e.g., in operation 310), and may also include audio received from the customer during an interaction with a human agent (e.g., in operation 320). The audio received from a customer may also include audio received during an initial request that the customer state the reason for initiating the interaction (e.g., in response to the question "Why are you calling us today?").

In some embodiments, the knowledge base controller 160 supplies the audio containing customer speech to the automatic speech recognition (ASR) server 170 to generate the recognized text output. The ASR server 170 performs the speech recognition using an automatic speech recognition engine (ASR engine) such as a large vocabulary continuous speech recognition (LVCSR) engine. The ASR engine may include one or more language models that are customized to the speech encountered by the contact center. For example, different language models may be configured for different natural languages spoken by the customers (e.g., English, Spanish, Mandarin Chinese, and the like) or may be configured to particular regional accents and vocabulary (e.g., American English, British English, Australian English, and the like), where a particular one of the language models may be selected based on a language requested at the beginning of the interaction (e.g., "for English, press one; para Español, oprima el número dos"), and/or based on geolocation information about the user (e.g., area codes and country codes obtained from caller id for telephone calls and IP addresses and other geolocation data for interactions conducted over the Internet).

Furthermore, customers communicating with contact centers of particular organizations may use some words more frequently than those words would appear in standard usage. For example, the names of products and services offered by the organization, technical terms used to describe the products, jargon associated with the particular industry that the organization operates in, and the like may all appear more frequently in contact center interactions than in everyday speech. As such, in some embodiments, the language model of the ASR engine used by the ASR server 170 is customized based on content that is specific to the organization associated with the contact center.

Customizing the language model in accordance with the actual words expected to be spoken by customers of the contact center typically improves the performance of the ASR engine in that it may generate more accurate results (e.g., recognized text that more accurately corresponds to what was actually spoken). Furthermore, customizing the language model to increase the likelihood of outputting words that appear in the knowledge base improves the likelihood of finding relevant documents when performing searches of the knowledge base based on the recognized text, as described in more detail below.

In some embodiments, the language model may be customized to the organization by including data from transcripts (e.g., manually generated transcripts) of prior interactions between customers and agents of the contact center. In some embodiments of the present invention, the language model or language models are customized using the content of the knowledge base 158, because the knowledge base 158 likely contains a significant amount of organization-specific terminology. For example, words from the knowledge base 158 may be converted to their constituent phonemes in accordance with the way customers pronounce the words, and these words may be added to the language model and weighted to approximate the frequency with which the words from the knowledge base appear in actual contact center interactions. One example of a system and method for incorporating the information from the knowledge base into a language model for a speech recognition engine is described in U.S. Patent Application No. 15/247,645 "Language Model Customization in Speech Recognition for Speech Analytics" and U.S. Patent Application No. 15/247,656 "Material Selection for Language Model Customization in Speech Recognition for Speech Analytics," both filed in the United States Patent and Trademark Office on August 25, 2016.

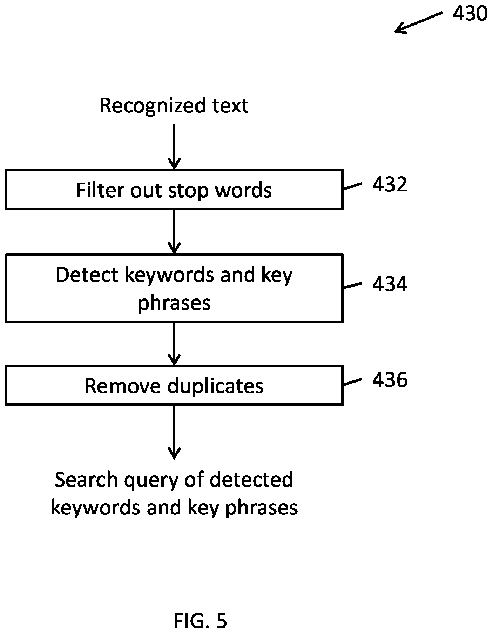

In operation 430, the knowledge base controller 160 generates a search query from the recognized text. FIG. 5 is a flowchart of a method for generating a search query from recognized text in accordance with one embodiment of the present invention. The generation of the search query may include selecting less than all of the words from the recognized text. For example, in operation 432, the search query can be generated by removing (or filtering out) stop words from the recognized text. These stop words include words that generally have low information content such as "a," "an," "the," "at," "from," "for," "want," "I," "tried," "need," etc. In some embodiments of the present invention, the generation of the search query includes selecting, in operation 434, one or more keywords or key phrases identified the recognized text, where the keywords and key phrases correspond to particular known topics and/or documents within the knowledge base 158. For example, the phrase "trouble charging battery" may be a known phrase that is connected to one or more documents (e.g., a topic) relating to troubleshooting battery problems. Another keyword within the recognized text may correspond to a particular model of a product offered by the company. As such, according to one embodiment of the present invention, the search query is generated from only the keywords or key phrases that are found in the recognized text.

One aspect of embodiments of the present invention, relates to generating, automatically, the collection of keywords and key phrases that are detected in operation 434 by applying mining the keywords from the knowledge base 158. Each document in the knowledge base 158 may be associated with metadata that may include one or more keywords that were manually generated by the author of the document. Alternatively, in some embodiments, each document may be analyzed to identify, automatically, one or more keywords from the text of the document using the term frequency-inverse document frequency (tf-idf) metric. As such, in one embodiment, the collected keywords and key phrases from the documents of the knowledge base 158 are collected (with duplicates removed) to form the collection of key words that are detected in operation 434.

In some embodiments, in operation 436, duplicates are removed from the search query, because natural language speech can frequently involve repetition of the same concepts and repeated instances of the same keywords or key phrases are unlikely to change the results of the search.

Returning to FIG. 4, in operation 450, the knowledge base controller 160 supplies the search query to the knowledge base 158 to perform the search, and the knowledge base 158 may return one or more documents in response to the search query. For example, in one embodiment, the knowledge base 158 is indexed by a search engine such as Apache Lucene^{®}, and the search query can be supplied to the search engine to identify the one or more matching documents of the knowledge base 158. In some embodiments of the present invention, matching documents are found by matching one or more keywords and/or key phrases in the search query with one or more keywords and/or key phrases in the metadata of the documents in the knowledge base 158.

In some embodiments, the one or more matching documents are returned to the knowledge base controller 160 to be supplied to the agent workstation 130 and/or the IVR/IMR 122, based on whether the customer is currently interacting with an agent or the IVR/IMR 122, respectively. In other embodiments, the one or more matching documents (or references or links thereto) are provided directly to the IVR/IMR 122 or to the agent workstation 130.

Accordingly, aspects of embodiments of the present invention are directed to the automatic searching of a knowledge base using customer speech describing at least one inquiry or issue to be resolved, and the automatic presentation of one or more documents relevant to the inquiry or issue to be resolved, either directly to the customer or to an agent interacting with the customer.

### Computing devices

As described herein, various applications and aspects of the present invention may be implemented in software, firmware, hardware, and combinations thereof. When implemented in software, the software may operate on a general purpose computing device such as a server, a desktop computer, a tablet computer, a smartphone, or a personal digital assistant. Such a general purpose computer includes a general purpose processor and memory.

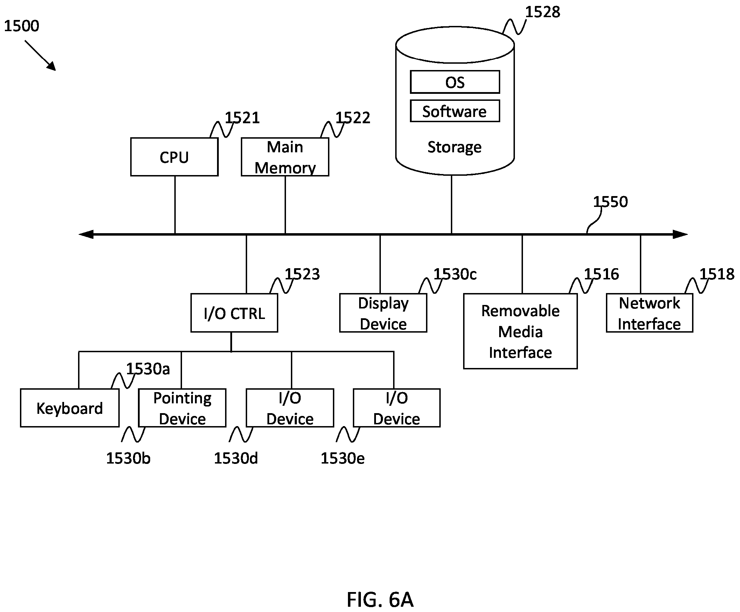

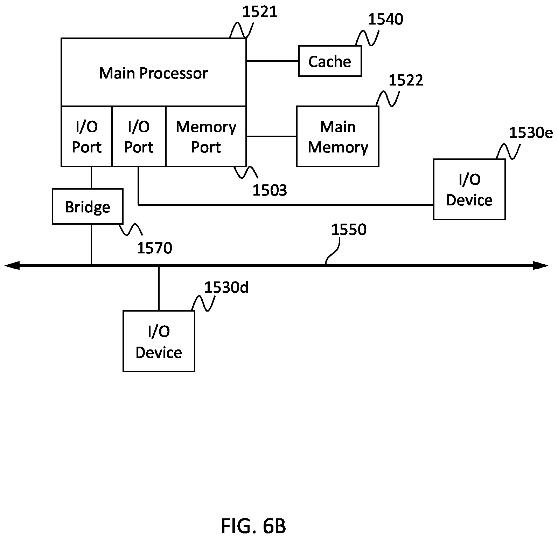

Each of the various servers, controllers, switches, gateways, engines, and/or modules (collectively referred to as servers) in the afore-described figures may be a process or thread, running on one or more processors, in one or more computing devices 1500 (e.g., FIG. 6A, FIG. 6B), executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that a computing device may be implemented via firmware (e.g. an application-specific integrated circuit), hardware, or a combination of software, firmware, and hardware. A person of skill in the art should also recognize that the functionality of various computing devices may be combined or integrated into a single computing device, or the functionality of a particular computing device may be distributed across one or more other computing devices without departing from the scope of the exemplary embodiments of the present invention. A server may be a software module, which may also simply be referred to as a module. The set of modules in the contact center may include servers, and other modules.

The various servers may be located on a computing device on-site at the same physical location as the agents of the contact center or may be located off-site (or in the cloud) in a geographically different location, e.g., in a remote data center, connected to the contact center via a network such as the Internet. In addition, some of the servers may be located in a computing device on-site at the contact center while others may be located in a computing device off-site, or servers providing redundant functionality may be provided both via on-site and off-site computing devices to provide greater fault tolerance. In some embodiments of the present invention, functionality provided by servers located on computing devices off-site may be accessed and provided over a virtual private network (VPN) as if such servers were on-site, or the functionality may be provided using a software as a service (SaaS) to provide functionality over the internet using various protocols, such as by exchanging data using encoded in extensible markup language (XML) or JavaScript Object notation (JSON).

FIG. 6A-FIG. 6B depicts block diagrams of a computing device 1500 as may be employed in exemplary embodiments of the present invention. Each computing device 1500 includes a central processing unit 1521 and a main memory unit 1522. As shown in FIG. 6A, the computing device 1500 may also include a storage device 1528, a removable media interface 1516, a network interface 1518, an input/output (I/O) controller 1523, one or more display devices 1530c, a keyboard 1530a and a pointing device 1530b, such as a mouse. The storage device 1528 may include, without limitation, storage for an operating system and software. As shown in FIG. 6B, each computing device 1500 may also include additional optional elements, such as a memory port 1503, a bridge 1570, one or more additional input/output devices 1530d, 1530e and a cache memory 1540 in communication with the central processing unit 1521. The input/output devices 1530a, 1530b, 1530d, and 1530e may collectively be referred to herein using reference numeral 1530.

The central processing unit 1521 is any logic circuitry that responds to and processes instructions fetched from the main memory unit 1522. It may be implemented, for example, in an integrated circuit, in the form of a microprocessor, microcontroller, or graphics processing unit (GPU), or in a field-programmable gate array (FPGA) or application-specific integrated circuit (ASIC). The main memory unit 1522 may be one or more memory chips capable of storing data and allowing any storage location to be directly accessed by the central processing unit 1521. As shown in FIG. 6A, the central processing unit 1521 communicates with the main memory 1522 via a system bus 1550. As shown in FIG. 6B, the central processing unit 1521 may also communicate directly with the main memory 1522 via a memory port 1503.

FIG. 6B depicts an embodiment in which the central processing unit 1521 communicates directly with cache memory 1540 via a secondary bus, sometimes referred to as a backside bus. In other embodiments, the central processing unit 1521 communicates with the cache memory 1540 using the system bus 1550. The cache memory 1540 typically has a faster response time than main memory 1522. As shown in FIG. 6A, the central processing unit 1521 communicates with various I/O devices 1530 via the local system bus 1550. Various buses may be used as the local system bus 1550, including a Video Electronics Standards Association (VESA) Local bus (VLB), an Industry Standard Architecture (ISA) bus, an Extended Industry Standard Architecture (EISA) bus, a MicroChannel Architecture (MCA) bus, a Peripheral Component Interconnect (PCI) bus, a PCI Extended (PCI-X) bus, a PCI-Express bus, or a NuBus. For embodiments in which an I/O device is a display device 1530c, the central processing unit 1521 may communicate with the display device 1530c through an Advanced Graphics Port (AGP). FIG. 6B depicts an embodiment of a computer 1500 in which the central processing unit 1521 communicates directly with I/O device 1530e. FIG. 6B also depicts an embodiment in which local busses and direct communication are mixed: the central processing unit 1521 communicates with I/O device 1530d using a local system bus 1550 while communicating with I/O device 1530e directly.

A wide variety of I/O devices 1530 may be present in the computing device 1500. Input devices include one or more keyboards 1530a, mice, trackpads, trackballs, microphones, and drawing tablets. Output devices include video display devices 1530c, speakers, and printers. An I/O controller 1523, as shown in FIG. 6A, may control the I/O devices. The I/O controller may control one or more I/O devices such as a keyboard 1530a and a pointing device 1530b, e.g., a mouse or optical pen.

Referring again to FIG. 6A, the computing device 1500 may support one or more removable media interfaces 1516, such as a floppy disk drive, a CD-ROM drive, a DVD-ROM drive, tape drives of various formats, a USB port, a Secure Digital or COMPACT FLASH^{™} memory card port, or any other device suitable for reading data from read-only media, or for reading data from, or writing data to, read-write media. An I/O device 1530 may be a bridge between the system bus 1550 and a removable media interface 1516.

The removable media interface 1516 may for example be used for installing software and programs. The computing device 1500 may further include a storage device 1528, such as one or more hard disk drives or hard disk drive arrays, for storing an operating system and other related software, and for storing application software programs. Optionally, a removable media interface 1516 may also be used as the storage device. For example, the operating system and the software may be run from a bootable medium, for example, a bootable CD.

In some embodiments, the computing device 1500 may include or be connected to multiple display devices 1530c, which each may be of the same or different type and/or form. As such, any of the I/O devices 1530 and/or the I/O controller 1523 may include any type and/or form of suitable hardware, software, or combination of hardware and software to support, enable or provide for the connection to, and use of, multiple display devices 1530c by the computing device 1500. For example, the computing device 1500 may include any type and/or form of video adapter, video card, driver, and/or library to interface, communicate, connect, or otherwise use the display devices 1530c. In one embodiment, a video adapter may include multiple connectors to interface to multiple display devices 1530c. In other embodiments, the computing device 1500 may include multiple video adapters, with each video adapter connected to one or more of the display devices 1530c. In some embodiments, any portion of the operating system of the computing device 1500 may be configured for using multiple display devices 1530c. In other embodiments, one or more of the display devices 1530c may be provided by one or more other computing devices, connected, for example, to the computing device 1500 via a network. These embodiments may include any type of software designed and constructed to use the display device of another computing device as a second display device 1530c for the computing device 1500. One of ordinary skill in the art will recognize and appreciate the various ways and embodiments that a computing device 1500 may be configured to have multiple display devices 1530c.

A computing device 1500 of the sort depicted in FIG. 6A-FIG. 6B may operate under the control of an operating system, which controls scheduling of tasks and access to system resources. The computing device 1500 may be running any operating system, any embedded operating system, any real-time operating system, any open source operating system, any proprietary operating system, any operating systems for mobile computing devices, or any other operating system capable of running on the computing device and performing the operations described herein.

The computing device 1500 may be any workstation, desktop computer, laptop or notebook computer, server machine, handheld computer, mobile telephone or other portable telecommunication device, media playing device, gaming system, mobile computing device, or any other type and/or form of computing, telecommunications or media device that is capable of communication and that has sufficient processor power and memory capacity to perform the operations described herein. In some embodiments, the computing device 1500 may have different processors, operating systems, and input devices consistent with the device.

In other embodiments the computing device 1500 is a mobile device, such as a Java-enabled cellular telephone or personal digital assistant (PDA), a smart phone, a digital audio player, or a portable media player. In some embodiments, the computing device 1500 includes a combination of devices, such as a mobile phone combined with a digital audio player or portable media player.

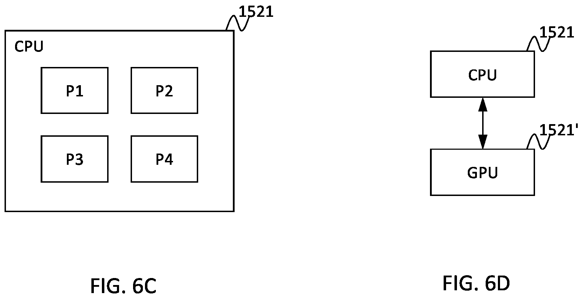

As shown in FIG. 6C, the central processing unit 1521 may include multiple processors P1, P2, P3, P4, and may provide functionality for simultaneous execution of instructions or for simultaneous execution of one instruction on more than one piece of data. In some embodiments, the computing device 1500 may include a parallel processor with one or more cores. In one of these embodiments, the computing device 1500 is a shared memory parallel device, with multiple processors and/or multiple processor cores, accessing all available memory as a single global address space. In another of these embodiments, the computing device 1500 is a distributed memory parallel device with multiple processors each accessing local memory only. In still another of these embodiments, the computing device 1500 has both some memory which is shared and some memory which may only be accessed by particular processors or subsets of processors. In still even another of these embodiments, the central processing unit 1521 includes a multicore microprocessor, which combines two or more independent processors into a single package, e.g., into a single integrated circuit (IC). In one exemplary embodiment, depicted in FIG. 6D, the computing device 1500 includes at least one central processing unit 1521 and at least one graphics processing unit 1521'.

In some embodiments, a central processing unit 1521 provides single instruction, multiple data (SIMD) functionality, e.g., execution of a single instruction simultaneously on multiple pieces of data. In other embodiments, several processors in the central processing unit 1521 may provide functionality for execution of multiple instructions simultaneously on multiple pieces of data (MIMD). In still other embodiments, the central processing unit 1521 may use any combination of SIMD and MIMD cores in a single device.

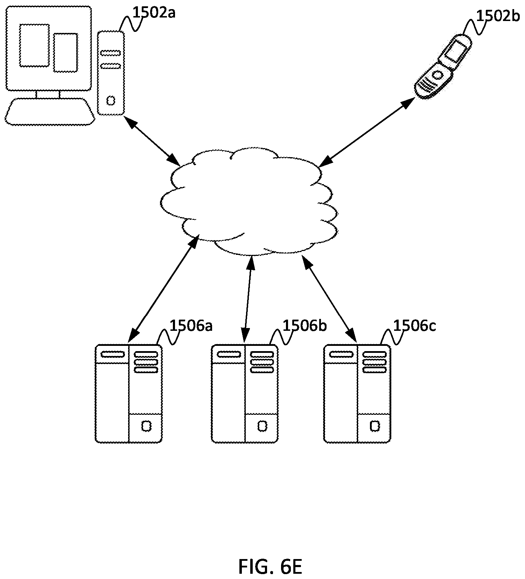

A computing device may be one of a plurality of machines connected by a network, or it may include a plurality of machines so connected. FIG. 6E shows an exemplary network environment. The network environment includes one or more local machines 1502a, 1502b (also generally referred to as local machine(s) 1502, client(s) 1502, client node(s) 1502, client machine(s) 1502, client computer(s) 1502, client device(s) 1502, endpoint(s) 1502, or endpoint node(s) 1502) in communication with one or more remote machines 1506a, 1506b, 1506c (also generally referred to as server machine(s) 1506 or remote machine(s) 1506) via one or more networks 1504. In some embodiments, a local machine 1502 has the capacity to function as both a client node seeking access to resources provided by a server machine and as a server machine providing access to hosted resources for other clients 1502a, 1502b. Although only two clients 1502 and three server machines 1506 are illustrated in FIG. 6E, there may, in general, be an arbitrary number of each. The network 1504 may be a local-area network (LAN), e.g., a private network such as a company Intranet, a metropolitan area network (MAN), or a wide area network (WAN), such as the Internet, or another public network, or a combination thereof.

The computing device 1500 may include a network interface 1518 to interface to the network 1504 through a variety of connections including, but not limited to, standard telephone lines, local-area network (LAN), or wide area network (WAN) links, broadband connections, wireless connections, or a combination of any or all of the above. Connections may be established using a variety of communication protocols. In one embodiment, the computing device 1500 communicates with other computing devices 1500 via any type and/or form of gateway or tunneling protocol such as Secure Socket Layer (SSL) or Transport Layer Security (TLS). The network interface 1518 may include a built-in network adapter, such as a network interface card, suitable for interfacing the computing device 1500 to any type of network capable of communication and performing the operations described herein. An I/O device 1530 may be a bridge between the system bus 1550 and an external communication bus.

According to one embodiment, the network environment of FIG. 6E may be a virtual network environment where the various components of the network are virtualized. For example, the various machines 1502 may be virtual machines implemented as a software-based computer running on a physical machine. The virtual machines may share the same operating system. In other embodiments, different operating system may be run on each virtual machine instance. According to one embodiment, a "hypervisor" type of virtualization is implemented where multiple virtual machines run on the same host physical machine, each acting as if it has its own dedicated box. Of course, the virtual machines may also run on different host physical machines.

Other types of virtualization is also contemplated, such as, for example, the network (e.g. via Software Defined Networking (SDN)). Functions, such as functions of the session border controller and other types of functions, may also be virtualized, such as, for example, via Network Functions Virtualization (NFV).

While the present invention has been described in connection with certain exemplary embodiments, it is to be understood that the invention is not limited to the disclosed embodiments, but, on the contrary, is intended to cover various modifications included within the scope of the appended claims.

## Claims

1. A method for automatically retrieving documents based on customer speech during an interaction (202) between a customer end user device (108) and an agent device (130) in a contact center associated with an organization,
the method comprising:
receiving (302), by a routing server (124), the interaction (202) from the customer end user device (108);
determining (304), by the routing server (124), that no agent is available;
routing (306), by the routing server (124), the interaction (202) to a queue;
receiving (310), by an interactive voice response system (122), speech from the customer end user device (108);
providing (312) by the interactive voice response system (122) the speech from the customer end user device (108) to a knowledge base controller (160) to search a knowledge base (158) for one or more documents matching a query corresponding to the speech;
presenting (314) the one or more documents to the end user device (108);
routing (318) the interaction (202) to the agent device (130) such that the customer end user device (108), the contact center and the agent device (130) are connected via a communication network (110);
displaying the one or more documents on the agent device (130);
receiving, by a speech recognition processor (170), at the contact center associated with the organization, speech from the customer end user device (108);
performing, by the speech recognition processor (170), automatic speech recognition on the received speech to generate recognized text;
generating, by the knowledge base controller (160), a search query from the recognized text;
searching, by the knowledge base controller (160), the knowledge base (158) specific to the organization for one or more documents relevant to the search query, wherein further relevant documents are determined by matching one or more keywords in metadata of documents stored in the knowledge base;
returning, by the processor, the one or more further documents relevant to the search query to the agent device (130);
receiving additional speech from the customer during the interaction (202) between the customer end user device (108) and the agent device (130);
performing automatic speech recognition on the additional speech to generate additional recognized text;
updating the search query with the additional recognized text;
searching, by the knowledge base controller (160), the knowledge base (158) using the updated search query to identifying one or more documents relevant to the updated search query; and
updating the agent device (130) of the contact center in accordance with the one or more documents relevant to the updated search query,
wherein process of updating the agent device (130) according to additional speech from the end user device (108) continuously repeats during the duration of the interaction (202).

2. The method of claim 1, further comprising displaying the one or more further documents on a display device of an agent device (130) of the contact center during an interaction (202) with the customer.

3. The method of claim 1, wherein the interactive voice response system is configured to provide the at least one of the one or more documents via an audio communication channel.

4. The method of claim 1, wherein the interactive voice response system is configured to provide the at least one of the one or more documents via a hyperlink sent to the customer.

5. The method of claim 1, wherein the automatic speech recognition is performed using an automatic speech recognition engine and a language model customized to the contact center of the organization.

6. The method of claim 5, wherein the language model is customized based on documents stored in the knowledge base.

7. The method of claim 1, wherein the search query is generated by removing one or more words from the recognized text.

8. A system for automatically retrieving documents based on customer speech during an interaction (202) between a customer end user device (108) and an agent device (130) in a contact center associated with an organization, wherein the customer end user device (108), the contact center and the agent device (130) are connected via a communication network (110), comprising:
a processor; and
a memory storing instructions that when executed by a processor, cause the processor to:
receive (302), by a routing server (124), the interaction (202) from the customer end user device (108);
determine (304), by the routing server (124), that no agent is available;
route (306), by the routing server (124), the interaction (202) to a queue;
receive (310), by an interactive voice response system (122), speech from the customer end user device (108);
provide(312) by the interactive voice response system (122) the speech from the customer end user device (108) to a knowledge base controller (160) to search a knowledge base (158) for one or more documents matching a query corresponding to the speech;
present (314) the one or more documents to the end user device (108);
route (318) the interaction (202) to the agent device (130);
display the one or more documents on the agent device (130);
receive, at the contact center associated with the organization, speech from a customer;
perform automatic speech recognition on the received speech to generate recognized text;
generate a search query from the recognized text;
search the knowledge base (158) specific to the organization for one or more documents relevant to the search query, wherein further relevant documents are determined by matching one or more keywords in metadata of documents stored in the knowledge base (158);
return the one or more further documents relevant to the search to the agent device (130);
receive additional speech from the customer during the interaction (202) between the customer end user device (108) and the agent device (130);
perform automatic speech recognition on the additional speech to generate additional recognized text;
update the search query with the additional recognized text;
search the knowledge base (158) using the updated search query to identifying one or more documents relevant to the updated search query; and
update the agent device (130) of the agent workstation of the contact center in accordance with the one or more documents relevant to the updated search query,
wherein process of updating the agent device (130) according to additional speech from the end user device (108) continuously repeats during the duration of the interaction (202).

9. The system of claim 8, wherein the memory further stores instructions that, when executed by the processor, cause the processor to display the one or more further documents on a display device an agent workstation of the contact center during an interaction (202) with the customer.

10. The system of claim 8, wherein the interactive voice response system is configured to provide the at least one of the one or more documents via an audio communication channel.

11. The system of claim 8, wherein the interactive voice response system is configured to provide the at least one of the one or more documents via a hyperlink sent to the customer.

12. The system of claim 8, wherein the automatic speech recognition is performed using an automatic speech recognition engine and a language model customized to the contact center of the organization.

13. The system of claim 12, wherein the language model is customized based on documents stored in the knowledge base (158).

14. The system of claim 8, wherein the memory further stores instructions that, when executed by the processor, cause the processor to generate the search query by removing one or more words from the recognized text.

## Patentansprüche

1. Verfahren zum automatischen Abrufen von Dokumenten basierend auf Kundensprache während einer Interaktion (202) zwischen einer Kunden-Endnutzervorrichtung (108) und einer Agentenvorrichtung (130) in einem Kontaktzentrum, das einer Organisation zugeordnet ist,
wobei das Verfahren Folgendes umfasst:
Empfangen (302) der Interaktion (202) von der Kunden-Endnutzervorrichtung (108) durch einen Routing-Server (124);
Bestimmen (304), dass kein Agent verfügbar ist, durch den Routing-Server (124);
Routen (306) der Interaktion (202) zu einer Warteschlange durch den Routing-Server (124);
Empfangen (310) von Sprache von der Kunden-Endnutzervorrichtung (108) durch ein interaktives Sprachdialogsystem (122);
Bereitstellen (312) der Sprache von der Kunden-Endnutzervorrichtung (108) an eine Wissensbasissteuerung (160) durch das interaktive Sprachdialogsystem (122), um eine Wissensbasis (158) nach einem oder mehreren Dokumenten zu durchsuchen, die mit einer der Sprache entsprechenden Abfrage übereinstimmen;
Präsentieren (314) des einen oder der mehreren Dokumente an die Endnutzervorrichtung (108);
Routen (318) der Interaktion (202) an die Agentenvorrichtung (130), sodass die Kunden-Endnutzervorrichtung (108), das Kontaktzentrum und die Agentenvorrichtung (130) über ein Kommunikationsnetzwerk (110) verbunden sind;
Anzeigen des einen oder der mehreren Dokumente auf der Agentenvorrichtung (130);
Empfangen von Sprache von der Kunden-Endnutzervorrichtung (108) durch einen Spracherkennungsprozessor (170) an dem Kontaktzentrum, das der Organisation zugeordnet ist;
Durchführen einer automatischen Spracherkennung auf der empfangenen Sprache, um einen erkannten Text zu erzeugen, durch den Spracherkennungsprozessor (170);
Erzeugen einer Suchanfrage aus dem erkannten Text durch die Wissensbasissteuerung (160);
Durchsuchen der organisationsspezifischen Wissensbasis (158) nach einem oder mehreren für die Suchanfrage relevanten Dokumenten durch die Wissensbasissteuerung (160), wobei weitere relevante Dokumente durch Übereinstimmen eines oder der mehreren Schlüsselwörter in Metadaten von in der Wissensbasis gespeicherten Dokumenten bestimmt werden;
Zurückführen des einen oder der mehreren weiteren Dokumente, die für die Suchanfrage relevant sind, an die Agentenvorrichtung (130) durch den Prozessor;
Empfangen zusätzlicher Sprache von dem Kunden während der Interaktion (202) zwischen der Kunden-Endnutzervorrichtung (108) und der Agentenvorrichtung (130);
Durchführen einer automatischen Spracherkennung aus der zusätzlichen Sprache, um zusätzlichen erkannten Text zu erzeugen;
Aktualisieren der Suchanfrage mit dem zusätzlichen erkannten Text;
Durchsuchen der Wissensbasis (158) unter Verwendung der aktualisierten Suchanfrage zum Identifizieren eines oder mehrerer Dokumente, die für die aktualisierte Suchanfrage relevant sind, durch die Wissensbasissteuerung (160); und
Aktualisieren der Agentenvorrichtung (130) des Kontaktzentrums gemäß dem einen oder den mehreren Dokumenten, die für die aktualisierte Suchanfrage relevant sind,
wobei sich der Prozess des Aktualisierens der Agentenvorrichtung (130) gemäß zusätzlicher Sprache von der Endbenutzervorrichtung (108) während der Dauer der Interaktion (202) kontinuierlich wiederholt.

2. Verfahren nach Anspruch 1, ferner umfassend Anzeigen des einen oder der mehreren weiteren Dokumente auf einer Anzeigevorrichtung von einer Agentenvorrichtung (130) des Kontaktzentrums während einer Interaktion (202) mit dem Kunden.

3. Verfahren nach Anspruch 1, wobei das interaktive Sprachdialogsystem dazu konfiguriert ist, mindestens eines des einen oder der mehreren Dokumente über einen Audiokommunikationskanal bereitzustellen.

4. Verfahren nach Anspruch 1, wobei das interaktive Sprachdialogsystem dazu konfiguriert ist, mindestens eines der ein oder mehreren Dokumente über einen an den Kunden gesendeten Hyperlink bereitzustellen.

5. Verfahren nach Anspruch 1, wobei die automatische Spracherkennung unter Verwendung einer automatischen Spracherkennungsmaschine und eines an das Kontaktzentrum der Organisation angepassten Sprachmodells durchgeführt wird.

6. Verfahren nach Anspruch 5, wobei das Sprachmodell basierend auf den in der Wissensbasis gespeicherten Dokumenten angepasst wird.

7. Verfahren nach Anspruch 1, wobei die Suchanfrage durch Entfernen eines oder mehrerer Wörter aus dem erkannten Text erzeugt wird.

8. System zum automatischen Abrufen von Dokumenten basierend auf Kundensprache während einer Interaktion (202) zwischen einer Kunden-Endnutzervorrichtung (108) und einer Agentenvorrichtung (130) in einem Kontaktzentrum, das einer Organisation zugeordnet ist, wobei die Kunden-Endnutzervorrichtung (108), das Kontaktzentrum und die Agentenvorrichtung (130) über ein Kommunikationsnetzwerk (110) verbunden sind, umfassend:
einen Prozessor; und
einen Speicher, der Anweisungen speichert, die, wenn sie von einem Prozessor ausgeführt werden, den Prozessor zu Folgendem veranlassen:
Empfangen (302) der Interaktion (202) von der Kunden-Endnutzervorrichtung (108) durch einen Routing-Server (124);
Bestimmen (304), dass kein Agent verfügbar ist, durch den Routing-Server (124);
Routen (306) der Interaktion (202) zu einer Warteschlange durch den Routing-Server (124);
Empfangen (310) von Sprache von der Kunden-Endnutzervorrichtung (108) durch ein interaktives Sprachdialogsystem (122);
Bereitstellen (312) der Sprache von der Kunden-Endnutzervorrichtung (108) an eine Wissensbasissteuerung (160) durch das interaktive Sprachdialogsystem (122), um eine Wissensbasis (158) nach einem oder mehreren Dokumenten zu durchsuchen, die mit einer der Sprache entsprechenden Abfrage übereinstimmen;
Vorlegen (314) des einen oder der mehreren Dokumente an der Endnutzervorrichtung (108);
Routen (318) der Interaktion (202) an die Agentenvorrichtung (130);
Anzeigen des einen oder der mehreren Dokumente auf der Agentenvorrichtung (130);
Empfangen von Sprache von einem Kunden in dem Kontaktzentrum, das der Organisation zugeordnet ist;
Durchführen einer automatischen Spracherkennung an der empfangenen Sprache, um erkannten Text zu erzeugen;
Erzeugen einer Suchanfrage aus dem erkannten Text;
Durchsuchen der organisationsspezifischen Wissensbasis (158) nach einem oder mehreren für die Suchanfrage relevanten Dokumenten, wobei weitere relevante Dokumente durch Übereinstimmen eines oder der mehreren Schlüsselwörter in Metadaten von in der Wissensbasis (158) gespeicherten Dokumenten bestimmt werden;
Zurückführen des einen oder der mehreren weiteren Dokumente, die für die Suche relevant sind, an die Agentenvorrichtung (130);
Empfangen zusätzlicher Sprache von dem Kunden während der Interaktion (202) zwischen der Kunden-Endnutzervorrichtung (108) und der Agentenvorrichtung (130);
Durchführen einer automatischen Spracherkennung aus der zusätzlichen Sprache, um zusätzlichen erkannten Text zu erzeugen;
Aktualisieren der Suchanfrage mit dem zusätzlichen erkannten Text;
Durchsuchen der Wissensbasis (158) unter Verwendung der aktualisierten Suchanfrage zum Identifizieren eines oder mehrerer Dokumente, die für die aktualisierte Suchanfrage relevant sind; und
Aktualisieren der Agentenvorrichtung (130) des Agentenarbeitsplatzes des Kontaktzentrums gemäß dem einen oder den mehreren Dokumenten, die für die aktualisierte Suchanfrage relevant sind,
wobei sich der Prozess des Aktualisierens der Agentenvorrichtung (130) gemäß zusätzlicher Sprache von der Endbenutzervorrichtung (108) während der Dauer der Interaktion (202) kontinuierlich wiederholt.

9. System nach Anspruch 8, wobei der Speicher ferner Anweisungen speichert, die, wenn sie von dem Prozessor ausgeführt werden, den Prozessor veranlassen, das eine oder die mehreren weiteren Dokumente auf einer Anzeigevorrichtung an einem Agentenarbeitsplatz des Kontaktzentrums während einer Interaktion (202) mit dem Kunden anzuzeigen.

10. System nach Anspruch 8, wobei das interaktive Sprachdialogsystem dazu konfiguriert ist, mindestens eines des einen oder der mehreren Dokumente über einen Audiokommunikationskanal bereitzustellen.

11. System nach Anspruch 8, wobei das interaktive Sprachdialogsystem dazu konfiguriert ist, mindestens eines der ein oder mehreren Dokumente über einen an den Kunden gesendeten Hyperlink bereitzustellen.

12. System nach Anspruch 8, wobei die automatische Spracherkennung unter Verwendung einer automatischen Spracherkennungsmaschine und eines an das Kontaktzentrum der Organisation angepassten Sprachmodells durchgeführt wird.

13. System nach Anspruch 12, wobei das Sprachmodell basierend auf den in der Wissensbasis (158) gespeicherten Dokumenten angepasst wird.

14. System nach Anspruch 8, wobei der Speicher ferner Anweisungen speichert, die, wenn sie vom Prozessor ausgeführt werden, den Prozessor veranlassen, die Suchanfrage durch Entfernen eines oder mehrerer Wörter aus dem erkannten Text zu erzeugen.

## Revendications

1. Procédé de récupération automatique de documents sur la base de la parole d'un client lors d'une interaction (202) entre un dispositif d'utilisateur final client (108) et un dispositif d'agent (130) dans un centre de contact associé à une organisation,
le procédé comprenant :
la réception (302), par un serveur de routage (124), de l'interaction (202) en provenance du dispositif d'utilisateur final client (108) ;
la détermination (304), par le serveur de routage (124), qu'aucun agent n'est disponible ;
le routage (306), par le serveur de routage (124), de l'interaction (202) vers une file d'attente ;
la réception (310), par un système de réponse vocale interactif (122), d'une parole provenant du dispositif d'utilisateur final client (108) ;
la fourniture (312), par le système de réponse vocale interactive (122), de la parole du dispositif d'utilisateur final client (108) à un contrôleur de base de connaissances (160) pour rechercher dans une base de connaissances (158) un ou plusieurs documents correspondant à une requête correspondant à la parole ;
la présentation (314) de l'un ou des plusieurs documents au dispositif d'utilisateur final (108) ;
le routage (318) de l'interaction (202) vers le dispositif d'agent (130) de telle sorte que le dispositif d'utilisateur final client (108), le centre de contact et le dispositif d'agent (130) soient connectés via un réseau de communication (110) ;
l'affichage de l'un ou des plusieurs documents sur le dispositif d'agent (130) ;
la réception, par un processeur de reconnaissance vocale (170), au niveau du centre de contact associé à l'organisation, de la parole provenant du dispositif d'utilisateur final client (108) ;
la réalisation, par le processeur de reconnaissance vocale (170), d'une reconnaissance vocale automatique sur la parole reçue pour générer un texte reconnu ;
la génération, par le contrôleur de base de connaissances (160), d'une requête de recherche à partir du texte reconnu ;
la recherche, par le contrôleur de base de connaissances (160), dans la base de connaissances (158) spécifique à l'organisation, d'un ou de plusieurs documents pertinents pour la requête de recherche, dans lequel d'autres documents pertinents sont déterminés en faisant correspondre un ou plusieurs mots-clés dans les métadonnées de documents stockés dans la base de connaissances ;
le renvoi, par le processeur, de l'un ou des plusieurs autres documents pertinents à la requête de recherche au dispositif d'agent (130) ;
la réception d'une parole supplémentaire du client pendant l'interaction (202) entre le dispositif d'utilisateur final du client (108) et le dispositif d'agent (130) ;
la réalisation d'une reconnaissance vocale automatique sur la parole supplémentaire pour générer un texte reconnu supplémentaire ;
la mise à jour de la requête de recherche avec le texte supplémentaire reconnu ;
la recherche, par le contrôleur de base de connaissances (160), de la base de connaissances (158) à l'aide de la requête de recherche mise à jour pour identifier un ou plusieurs documents pertinents pour la requête de recherche mise à jour ; et
la mise à jour du dispositif d'agent (130) du centre de contact en fonction de l'un ou des plusieurs documents pertinents pour la requête de recherche mise à jour,
dans lequel le processus de mise à jour du dispositif d'agent (130) en fonction de la parole supplémentaire provenant du dispositif d'utilisateur final (108) se répète en continu pendant la durée de l'interaction (202).

2. Procédé selon la revendication 1, comprenant également l'affichage de l'un ou des plusieurs documents supplémentaires sur un dispositif d'affichage d'un dispositif d'agent (130) du centre de contact pendant une interaction (202) avec le client.

3. Procédé selon la revendication 1, dans lequel le système de réponse vocale interactif est configuré pour fournir au moins l'un de l'un ou des plusieurs documents via un canal de communication audio.

4. Procédé selon la revendication 1, dans lequel le système de réponse vocale interactif est configuré pour fournir au moins l'un de l'un ou des plusieurs documents via un lien hypertexte envoyé au client.

5. Procédé selon la revendication 1, dans lequel la reconnaissance vocale automatique est effectuée à l'aide d'un moteur de reconnaissance vocale automatique et d'un modèle de langage personnalisé pour le centre de contact de l'organisation.

6. Procédé selon la revendication 5, dans lequel le modèle de langage est personnalisé sur la base de documents stockés dans la base de connaissances.

7. Procédé selon la revendication 1, dans lequel la requête de recherche est générée en supprimant un ou plusieurs mots du texte reconnu.

8. Système de récupération automatique de documents sur la base de la parole d'un client lors d'une interaction (202) entre un dispositif d'utilisateur final client (108) et un dispositif d'agent (130) dans un centre de contact associé à une organisation, dans lequel le dispositif d'utilisateur final client (108), le centre de contact et le dispositif d'agent (130) sont connectés via un réseau de communication (110), comprenant :
un processeur ; et
une mémoire stockant des instructions qui, lorsqu'elles sont exécutées par un processeur, amènent le processeur à :
recevoir (302), par un serveur de routage (124), l'interaction (202) en provenance du dispositif d'utilisateur final client (108) ;
déterminer (304), par le serveur de routage (124), qu'aucun agent n'est disponible ;
acheminer (306), par le serveur de routage (124), l'interaction (202) vers une file d'attente ;
recevoir (310), par un système de réponse vocale interactif (122), une parole provenant du dispositif d'utilisateur final client (108) ;
fournir (312), par le système de réponse vocale interactive (122), la parole du dispositif d'utilisateur final client (108) à un contrôleur de base de connaissances (160) pour rechercher dans une base de connaissances (158) un ou plusieurs documents correspondant à une requête correspondant à la parole ;
présenter (314) l'un ou les plusieurs documents au dispositif d'utilisateur final (108) ;
acheminer (318) l'interaction (202) vers le dispositif d'agent (130) ;
afficher l'un ou les plusieurs documents sur le dispositif d'agent (130) ;
recevoir, au centre de contact associé à l'organisation, la parole d'un client ;
effectuer une reconnaissance vocale automatique sur la parole reçue pour générer un texte reconnu ;
générer une requête de recherche à partir du texte reconnu ;
rechercher, dans la base de connaissances (158) spécifique à l'organisation, un ou plusieurs documents pertinents pour la requête de recherche, dans lequel d'autres documents pertinents sont déterminés en faisant correspondre un ou plusieurs mots-clés dans les métadonnées de documents stockés dans la base de connaissances (158) ;
renvoyer l'un ou les plusieurs autres documents pertinents à la recherche au dispositif d'agent (130) ;
recevoir une parole supplémentaire du client pendant l'interaction (202) entre le dispositif d'utilisateur final du client (108) et le dispositif d'agent (130) ;
exécuter une reconnaissance vocale automatique sur la parole supplémentaire pour générer un texte reconnu supplémentaire ;
mettre à jour la requête de recherche avec le texte supplémentaire reconnu ;
rechercher la base de connaissances (158) à l'aide de la requête de recherche mise à jour pour identifier un ou plusieurs documents pertinents pour la requête de recherche mise à jour ; et
mettre à jour le dispositif d'agent (130) du poste de travail d'agent centre de contact en fonction de l'un ou des plusieurs documents pertinents pour la requête de recherche mise à jour, dans lequel le processus de mise à jour du dispositif d'agent (130) en fonction de la parole supplémentaire provenant du dispositif d'utilisateur final (108) se répète en continu pendant la durée de l'interaction (202).

9. Système selon la revendication 8, dans lequel la mémoire stocke également des instructions qui, lorsqu'elles sont exécutées par le processeur, amènent le processeur à afficher l'un ou les plusieurs documents supplémentaires sur un dispositif d'affichage d'un poste de travail d'agent du centre de contact pendant une interaction (202) avec le client.

10. Système selon la revendication 8, dans lequel le système de réponse vocale interactif est configuré pour fournir au moins l'un de l'un ou des plusieurs documents via un canal de communication audio.

11. Système selon la revendication 8, dans lequel le système de réponse vocale interactif est configuré pour fournir au moins l'un de l'un ou des plusieurs documents via un lien hypertexte envoyé au client.

12. Système selon la revendication 8, dans lequel la reconnaissance vocale automatique est effectuée à l'aide d'un moteur de reconnaissance vocale automatique et d'un modèle de langage personnalisé pour le centre de contact de l'organisation.

13. Système selon la revendication 12, dans lequel le modèle de langage est personnalisé sur la base de documents stockés dans la base de connaissances (158).

14. Système selon la revendication 8, dans lequel la mémoire stocke également des instructions qui, lorsqu'elles sont exécutées par le processeur, amènent le processeur à générer la requête de recherche en supprimant un ou plusieurs mots du texte reconnu.
